# FASCICULE DE BREVET EUROPEEN

(11) **EP 2 656 656 B1**
(45) Date de publication et mention de la délivrance du brevet: **26.08.2015**
(21) Numéro de dépôt: 11799158.8
(22) Date de dépôt: 14.12.2011
(51) Int. Cl.: H04W 28/02, H04L 12/911, H04L 12/927

(54) **Procédé de gestion de la politique de service dans un réseau de télécommunication**
Verfahren zur Verwaltung von Dienstrichtlinien in einem Telekommunikationsnetz
Method for managing service policy in a telecommunications network

(30) Priorité: 22.12.2010 FR 1005036
(43) Date de publication de la demande: 30.10.2013
(73) Titulaire: Airbus Defence and Space SAS, 78130 Les Mureaux (FR)
(72) Inventeur: POLETTI, Claude, F-92260 Fontenay Aux Roses (FR); CARTIGNY, Marc, F-78400 Chatou (FR); SOULERES, Eric, F-31400 Toulouse (FR)
(74) Mandataire: Maillet, Alain
(86) Numéro de dépôt international: PCT/EP2011/072784
(87) Numéro de publication internationale: WO 2012/084647

(56) Documents cités:
- GB-A- 2 430 834
- ARISTIDES STAIKOS ET AL: "Protecting Premium Traffic in Colorless Core Backbone: Test Results", MILITARY COMMUNICATIONS CONFERENCE, 2007. MILCOM 2007. IEEE, IEEE, PISCATAWAY, NJ, USA, 29 octobre 2007 (2007-10-29), pages 1-7, XP031232806, ISBN: 978-1-4244-1512-0
- KIRK CHANG ET AL: "A Study on the Call Admission and Preemption Control Algorithms for Secure Wireless Ad Hoc Networks Using IPSec Tunneling", MILCOM 2006, 23 octobre 2006 (2006-10-23), pages 1-7, XP055002191, DOI: 10.1109/MILCOM.2006.302177 ISBN: 978-1-42-440617-3

## Description

La présente invention concerne le domaine du contrôle de la qualité de service au sein d'un réseau de télécommunication de données.

Les réseaux de communication modernes sont constitués d'une pluralité de noeuds de communication reliés entre eux par des liens de communication. Ces noeuds de communication comprennent des équipements terminaux tels que des postes informatiques, des terminaux de communication mobiles ou encore des serveurs d'application. Ils comprennent également des équipements intermédiaires tels que des relais, des routeurs qui servent à l'interconnexion et au routage du trafic de données entre les équipements terminaux.

Les liens de communication sont basés sur des technologies de transmission physique très diverses. On peut citer des technologies filaires comme la fibre optique, les liens Ethernet ou autres, et des technologies radio selon un large panel de protocoles tels que le WiFi, le WiMax, les liens satellites ou autres. Chacune de ces technologies conduit à des propriétés différentes concernant le canal de transmission utilisé tant en bande passante disponible, qu'en taux d'erreur ou variabilité de cette bande passante disponible. Aujourd'hui, la technologie dominante est une technologie de communication par paquet, typiquement le réseau IP (*Internet Protocol* en anglais).

Ces réseaux de communication servent à mettre en oeuvre une grande diversité de services, comme l'échange de communication voix, typiquement les services dits de VoIP (*Voice over IP* en anglais), la diffusion de programmes multimédia, typiquement des services télévisuels ou d'accès à des vidéos à la demande ou encore l'accès à des données, typiquement l'accès à des services WEB.

Ces applications ont des besoins en bande passante et en latence qui leurs sont propres. Les réseaux par transfert de paquets ne permettent pas historiquement de garantir une bande passante ou une latence donnée à un service particulier. Au contraire, les réseaux de communication par circuit sont basés sur l'établissement d'un circuit de communication entre les équipements finaux communiquants qui garantit une bande passante et une latence entre ces équipements dès lors que le circuit est établi. Un exemple de tels réseaux par circuit est le réseau téléphonique commuté.

Pour permettre le développement de services ayant des besoins contraints en bande passante et/ou en latence sur les réseaux de communication par paquet, un ensemble de technologies ont été développées et sont connues, entre autres, sous le vocable de QOS (*Quality Of Service* en anglais). Ces technologies sont basées sur la définition d'un ensemble de catégories de services en fonction des contraintes en communication. Le réseau est partitionné en domaines de sécurité appliquant une politique de qualité de service. Les paquets de données entrant dans le domaine sont marqués en fonction de la catégorie du service qui les émet (*coloring* en anglais), les flux de données sont admis ou refusés en entrée, leur débit peut être régulé (*policing* en anglais). Des priorités sont attribuées aux différentes catégories et les équipements intermédiaires du réseau qui font face à une congestion utilisent ces priorités pour éliminer les paquets les moins prioritaires et favoriser la transmission des paquets appartenant aux flux de données les plus prioritaires. Ces technologies sont complétées par d'autres mécanismes comme les listes de contrôle d'accès (ACL pour *Access Control List* en anglais), les règles de routage, l'admission des services et autres, pour former une politique de service. Cette politique de service définit l'admission, la diffusion, les bandes passantes requises pour un ensemble de service sur un domaine de communication. Cette politique de service est mise en oeuvre en différents points du réseau, points dont le comportement est au moins en partie dicté par cette politique. On peut citer parmi ces points, des routeurs, des applications, ou autres. Tous ces points constituent des points de mise en oeuvre de la politique de service ou PEP (*Politic Enforcement Point* en anglais).

Les liens physiques les plus délicats à gérer sont les liens radio. Ces liens sont sujets à des variations fortes de leur bande passante en fonction de leur environnement, ils sont soumis à de l'atténuation, aux interférences ou autres, qui dégradent dynamiquement leurs capacités de transmission. Les variations de bande passante de ces liens radio impactent la politique de service. Elles induisent un niveau de congestion variable du lien. La politique de service doit donc avantageusement prendre en compte ce niveau de congestion. En l'absence d'une telle prise en compte, il est nécessaire de configurer la politique de service pour une bande passante minimum et donc de sous-utiliser le lien radio. Ceci est particulièrement préjudiciable pour les liens radio satellites où la bande passante est précieuse et coûteuse.

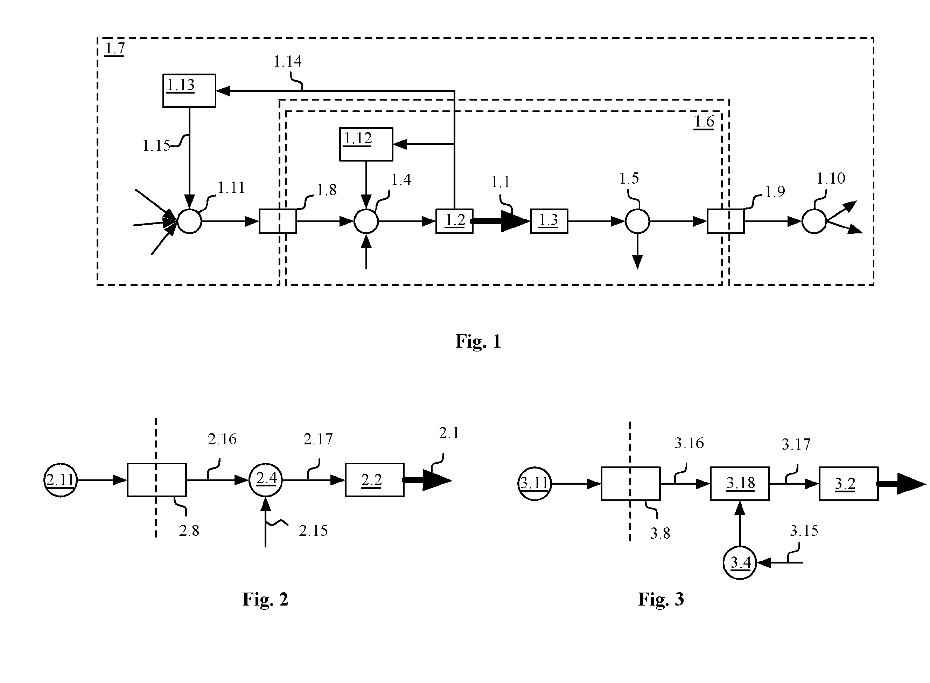

Il est également courant d'interconnecter différents domaines possédant chacun leur politique de services et pouvant être soumis à différentes contraintes de sécurité. La Fig. 1 illustre un exemple d'architecture de réseau illustrant ce mécanisme. Un premier réseau de communication 1.6 comprend un lien radio 1.1. Ce lien radio, typiquement un lien satellite mais toute autre technologie radio pourrait être utilisée, fonctionne à l'aide de deux modulateurs démodulateurs ou modems 1.2 et 1.3, l'un en amont du lien et l'autre en aval. En amont du modem 1.2 on trouve un routeur 1.4. Il en est de même en aval, le routeur 1.5. Les services transitent donc à travers le domaine sous la forme de flux de données empruntant le lien radio. D'autres routeurs non représentés peuvent être connectés à ces routeurs. On considère ici que le routeur 1.4 est à la frontière du domaine 1.6. A ce titre, il est un des points de mise en oeuvre de la politique de service. A ce titre, il impose les règles de la politique de service courante aux différents flux et requêtes entrant à son niveau dans le domaine. Le lien radio 1.1, sujet donc à des variations de bande passante, influe sur la capacité réelle des services entrant au niveau du routeur 1.4 à traverser dans de bonnes conditions le domaine 1.6. Il est donc avantageux de répercuter les informations de bande passante réellement disponible sur le lien 1.1 au niveau de la politique de service appliquée au point 1.4. Ceci peut se faire par une remontée d'information sur le niveau de congestion depuis le modem 1.2 en amont du lien radio vers un module de gestion 1.12 de la politique de service. Ce module étant alors informé des évolutions de la bande passante réellement disponible sur le lien 1.1 peut modifier la politique de service en conséquence et répercuter ses modifications en particulier sur le routeur 1.4. Ces modifications vont aussi impacter tous les acteurs de cette politique de service, le niveau applicatif entre autre, ceci n'étant pas représenté sur la figure.

Si l'on en vient à considérer un second domaine, ici le domaine 1.7, connecté au domaine 1.6 tel que représenté sur la figure, le point important ici est la sécurité de ce domaine. Le domaine 1.7 est un domaine disposant d'un niveau de sécurité plus élevé que le domaine 1.6 dont il utilise les services. On parle d'un réseau rouge pour le réseau de sécurité haute et de réseau noir pour le réseau de sécurité basse. Le réseau rouge 1.7 communique avec le réseau noir 1.6 au travers de passerelles de sécurité 1.8 et 1.9 en charge du filtrage et du chiffrement du trafic. Le trafic rouge issu du routeur 1.11 est donc chiffré par la passerelle de sécurité 1.8. Il transite ensuite par le réseau noir 1.6 et en particulier par le lien radio 1.1. Il est déchiffré par la passerelle de sécurité 1.9 en sortie du réseau noir à destination d'un routeur rouge 1.10. Le domaine 1.7 doit donc être considéré comme un domaine particulier au sens des services disposant de sa propre politique de service gérée par un module de gestion de politique de service 1.13. Cette politique s'applique par des consignes 1.15 vis-à-vis des points de mise en oeuvre de la politique dont le routeur 1.11 en amont du réseau noir et du lien 1.1. Le domaine 1.7 est également particulier du fait de son niveau de sécurité élevé en faisant un réseau rouge.

Lorsque l'on considère la prise en compte de la variation de bande passante sur le lien radio 1.1 par la politique de service tant du réseau rouge que du réseau noir, on constate que celle-ci nécessite d'être coordonnée. En effet, vu du réseau noir, le lien radio voit passer des services que l'on qualifie également de services noirs mais dont certains sont de fait des flux transportant de manière chiffrée des flux issus de services rouges. Les services rouges sont donc soumis d'une part à la politique de service du réseau rouge au sein du domaine rouge et d'autre part à la politique de service du domaine noir lorsqu'ils transitent par ce domaine. La prise en compte par le gestionnaire 1.13 de la politique de services du domaine rouge des variations de bande passante sur le lien radio au sein du domaine noir nécessite une remontée d'informations 1.14 entre le modem 1.2 et ce gestionnaire 1.13. Alternativement, on pourrait concevoir que le gestionnaire de politique de service 1.13 du domaine rouge communique avec celui 1.12 du domaine noir pour harmoniser leur politique. Une autre alternative consiste à concevoir le gestionnaire de politique de service 1.13 du domaine rouge et celui 1.12 du domaine noir comme ne faisant qu'un pour harmoniser leur politique de service. Ces modes de réalisation nécessitent une communication d'informations depuis le domaine noir vers le domaine rouge, ce qui constitue une faille pour la sécurité.

Les articles "Protecting Premium Traffic in Colorless Core Backbone: Test Results", Staikos A. et al, MILCOM 2007 et "A Study on the Call Admission and Préemption Control Algorithms for Secure Wireless Ad Hoc Networks Using IPSec Tunneling", Chang K et al, MILCOM 2006, décrivent des procédés de gestion de la politique de service au sein d'un réseau partitionné en domaines de sécurité.

L'invention vise à résoudre les problèmes précédents par un procédé de gestion de la politique de service appliqué à un réseau noir comprenant un lien radio et à un réseau rouge connecté à ce réseau noir géré par un ensemble prédéterminé de profils. La congestion du lien radio est détectée par tout moyen par le domaine noir. La congestion du lien radio est détectée par un procédé de détection de congestion fonctionnant grâce à des échanges au sein du domaine rouge. A un niveau de congestion détecté correspond pour chaque domaine un profil de politique de service alors mis en place. Ce procédé est applicable à un réseau à plus de deux niveaux de sécurité.

De cette façon, grâce aux profils prédéfinis et à la détection indépendante de la congestion du lien radio au sein de chaque domaine, on permet une cohérence des politiques de service mises en oeuvre dans les deux domaines en fonction du niveau de congestion du lien radio sans qu'il soit nécessaire d'échanger des informations remontant du domaine noir vers le domaine rouge, garantissant de fait une étanchéité parfaite des domaines de sécurité considérés.

L'invention concerne un réseau de télécommunication selon la revendication 1.

Selon un mode particulier de réalisation de l'invention, le domaine noir comporte un routeur noir en amont du lien radio qui constitue un des points de mise en oeuvre de la politique de service du domaine noir et qui agrège le trafic reçu du domaine rouge et le trafic issu du domaine noir pour produire un flux de donnée à destination du lien radio.

Selon un mode particulier de réalisation de l'invention, le domaine noir comporte un routeur noir en amont du lien radio qui constitue un des points de mise en oeuvre de la politique de service du domaine noir, et un commutateur qui agrège le trafic reçu dudit routeur du domaine noir et le trafic issu du domaine rouge pour produire un flux de donnée à destination du lien radio.

Selon un mode particulier de réalisation de l'invention, le trafic issu du domaine rouge transite par un routeur rouge qui constitue un des points de mise en oeuvre de la politique de service du domaine rouge puis par une passerelle de sécurité en charge du chiffrement dudit trafic.

L'invention concerne également un procédé de gestion de la politique de service selon la revendication 5.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre un exemple d'architecture de réseau interconnectant deux domaines de sécurité.
La Fig. 2 illustre un exemple de réalisation de l'admission des services en amont du lien radio.
La Fig. 3 illustre un autre exemple de réalisation de l'admission des services en amont du lien radio.
La Fig. 4 illustre un exemple d'architecture de réseau basée sur un lien radio multipoint à point.
La Fig. 5 illustre un exemple d'architecture de réseau comprenant deux réseaux rouges.
La Fig. 6 illustre l'organigramme du procédé de gestion de la politique de service selon un exemple de réalisation de l'invention.

La Fig. 2 illustre un exemple de réalisation de l'admission des services en amont du lien radio 2.1. On retrouve avec les mêmes numéros mineurs les éléments décrits dans la Fig. 1. On voit que le routeur noir 2.4 en amont du modulateur 2.2 du lien reçoit deux types de trafic. Un premier type de trafic référencé 2.15 est du trafic noir en provenance du domaine noir. Bien que représenté par une seule flèche, ce trafic peut être composé de multiples liens en entrée du routeur 2.4. Ce trafic se retrouve comme composante du trafic 2.17 en sortie du routeur. Il reçoit également du trafic 2.16 issu de la passerelle de sécurité et en amont d'un routeur rouge 2.11. Ce trafic est donc rouge en amont de la passerelle sécurisée. En aval 2.16, il fait partie du domaine noir et est donc également considéré comme noir. Mais c'est du trafic noir qui transporte de manière chiffrée le trafic rouge. Vu du routeur noir 2.4, il reçoit en entrée un ensemble de services 2.15 et 2.16 qu'il agrège en sortie pour produire un flux de données 2.17 à destination du lien. Pour lui tous ces services sont noirs et il leur applique une politique de service définie. Une éventuelle différenciation peut alors être faite dans le paramétrage de la politique de services. Dans ce schéma, les services rouges subissent une première politique de service dite rouge appliquée dans le domaine rouge par le routeur rouge 2.11 ou tout autre moyen en amont du passage dans le domaine noir. Ces mêmes services subissent une seconde politique de service noire appliquée dans le domaine noir par le routeur noir 2.4, ou tout autre moyen, aux services noirs qui les transportent.

Avantageusement la politique de service inclut un service de contrôle d'admission où l'admission des services dépend de la granularité de la topologie du réseau, du ou des liens et/ou du partitionnement de la topologie du lien.

Un second schéma peut être envisagé. C'est le schéma illustré par la Fig. 3, les références mineures correspondent à la Fig. 2. Dans ce schéma, le routeur 3.4 qui est un des points de mise en oeuvre de la politique de service du domaine noir n'est pas en série avec le trafic issu du domaine rouge 3.16. Le trafic issu du domaine rouge et le trafic purement noir sont rassemblés par un commutateur (*switch* en anglais) 3.18 qui n'est pas un point de mise en oeuvre de la politique de service. Dans ce nouveau schéma, la politique de service noire ne s'applique pas aux services transportant du trafic rouge. Les services rouges ne subissent alors que la politique de service rouge mise en oeuvre par le routeur rouge 3.11 qui est un des points de mise en oeuvre de la politique de service du domaine rouge.

La détection de la congestion du lien radio peut être faite par tout moyen au sein du domaine noir. Elle peut être faite de manière traditionnelle par une méthode explicite comme la remontée d'informations depuis le modem 1.2 vers le module de gestion de la politique de service 1.12. On peut également envisager toute autre méthode, par exemple des méthodes implicites telles qu'une comparaison des débits émis par le routeur 1.4 avec le débit reçu par le routeur 1.5 ou une analyse de la gigue (*jitter* en anglais) du trafic.

Le problème est plus délicat pour la détection de la congestion dans le domaine rouge. Pour garantir le parfait cloisonnement des domaines, on ne veut pas créer de lien de données remontant du domaine noir vers le domaine rouge ou de remontée d'information de congestion de domaine noir vers le domaine rouge au travers de la passerelle de sécurité. Il n'est donc pas envisageable de remonter l'information de congestion éventuellement disponible au niveau du modem 1.2 vers le module de gestion de la politique de service 1.13 du domaine rouge.

Il est donc nécessaire d'utiliser une méthode de détection de la congestion du lien radio basée uniquement sur des échanges de messages au sein du domaine rouge. De telles méthodes existent. On peut citer par exemple la demande de brevet français numéro 10/04220 du même demandeur. Cette méthode est basée sur une mesure périodique du débit émis par le routeur rouge 1.15 à destination de la passerelle de sécurité 1.8, et du débit reçu par le routeur rouge 1.10 en provenance de la passerelle de sécurité 1.9. Ces mesures de débit sont échangées entre les deux routeurs rouges sous la forme de messages rouges. Dans la pratique, il s'agit typiquement de messages de la couche 3 du modèle OSI. Lorsque l'on détecte un débit reçu inférieur au débit émis, on en déduit une congestion du lien radio. L'usage d'une telle méthode de détection de la congestion permet donc au module de gestion de la politique des services du domaine rouge de prendre connaissance de l'état de congestion du lien radio au sein du domaine noir sans nécessiter la moindre transmission d'informations entre le domaine noir et le rouge.

Une fois mises en place les méthodes de détection de la congestion du lien radio propres à chaque domaine, il faut encore assurer la cohérence entre les politiques de service appliquées en réponse à une congestion pour assurer une gestion harmonieuse du lien radio. Pour cela, on met en place dans chaque domaine un jeu de profils de services. Chaque profil de service contient un ensemble de paramètres définissant une politique de service. A un instant donné, un de ces profils est actif. Cela signifie que la politique de service appliquée à cet instant par le module de gestion de la politique de service du domaine utilise les paramètres dudit profil pour gérer la politique de service. Lorsque l'on détecte une congestion du lien radio, on provoque un changement du profil actif et donc un changement de la politique de service du domaine. On établit ainsi une correspondance entre un niveau de congestion détecté et un profil déterminé de politique de service. La cohérence est ainsi apportée par le paramétrage des différents profils.

La cohérence est également due au fait qu'une dégradation de la bande passante disponible au niveau du lien radio va provoquer une perte de paquets au sein du trafic transitant sur ce lien. Cette perte de paquets affecte typiquement les différents services de manière uniforme. De ce fait, le niveau de congestion est détecté de manière homogène par les différents domaines.

Ce paramétrage est fait en fonction de la topologie du domaine noir. Dans le cas illustré par la Fig. 2 où le routeur qui met en oeuvre la politique de service du niveau noir est en série avec le flux de données des services rouges, le paramétrage des profils doit prendre en compte le fait que ces services rouges sont soumis aux politiques de service des deux domaines. A l'inverse, dans une topologie telle que celle illustrée par la Fig. 3, ce n'est pas le cas. Les services rouges ne sont soumis qu'à la politique de service rouge et accèdent ensuite au lien à travers le domaine noir sans entrave.

La méthode de détection de la congestion du lien radio mise en oeuvre dans le domaine rouge implique qu'une congestion n'est détectée qu'en cas de trafic rouge traversant le lien. En effet, si une congestion se produit du fait du trafic noir et qu'à ce moment-là aucun trafic rouge ne transite, cette congestion sera détectée par le domaine noir mais pas par le domaine rouge. Le profil actif du domaine rouge restera donc un profil correspondant à un lien non congestionné. Ceci ne pose pas de problème du fait de l'absence de trafic rouge. Si du trafic rouge se présente, il sera soumis à la politique de service adaptée à un lien sans congestion. Très rapidement, la congestion sera détectée car elle produira une différence entre le débit émis et le débit reçu. Cette détection provoquera un basculement de profil dans le domaine rouge. En présence de trafic rouge, la politique de service s'adapte donc automatiquement à l'état réel courant de congestion du lien.

Ce phénomène peut également se produire dans le domaine noir en fonction de la méthode de détection de trafic utilisée. En particulier, si l'on utilise une méthode de détection basée, comme dans le domaine rouge, sur une mesure de débit effectif, la congestion ne sera détectée qu'en cas de trafic noir effectif. Et encore, ceci ne se produit que dans la topologie dite en parallèle illustrée par la Fig. 3. Dans la topologie dite en série illustrée par la Fig. 2, en l'absence de trafic noir, une congestion ne peut être causée que par le trafic rouge. Ce trafic rouge apparaissant comme du trafic noir au routeur noir 2.4, il participe automatiquement à la mesure de congestion au sein du domaine noir. On constate donc qu'une congestion du lien est alors automatiquement détectée au sein du domaine noir qu'il y ait ou pas de trafic purement noir à ce moment-là.

Ces considérations montrent que le moment de basculement d'un profil de politique de service à un autre pour l'adapter à un niveau de congestion peut être décalé dans le temps par rapport au moment de la congestion. Ceci ne se produit toutefois qu'en l'absence de trafic dans le domaine concerné. Dès qu'il y a du trafic, la congestion est détectée et le profil est adapté. Nous avons donc un jeu de profils sélectionné à un moment donné qui est toujours adapté au niveau de congestion du lien radio et de la réalité du trafic au sein du domaine considéré.

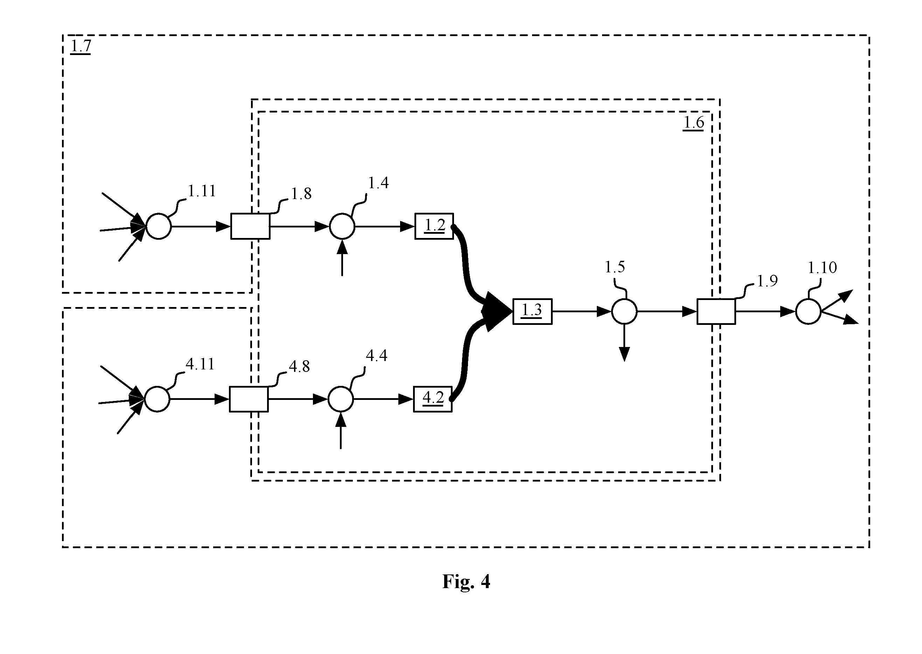

Le procédé décrit fonctionne quelle que soit la topologie du lien radio considérée. Celle-ci comprend les topologies multipoint à point tel qu'illustré par la Fig. 4. Cette figure reprend les références de la Fig. 1, sauf la seconde chaîne comprenant le second routeur rouge 4.11, la seconde passerelle de sécurité 4.8, le routeur noir 4.4 et le modem 4.2. Dans cette topologie, les services rouges empruntent deux voies de connexion vers une même destination. Des profils rouges sont définis de manière homogène et appliqués à chacune de ces voies de communication. Le procédé s'adapte en utilisant une méthode de détection de la congestion du lien qui va additionner les débits sortant des routeurs rouges 1.11 et 4.11 et les comparer au débit entrant dans le routeur rouge 1.10 en réception. Le même type d'adaptation est fait dans la méthode de détection de congestion utilisée dans le domaine noir. Il en est de même pour une topologie point à multipoint.

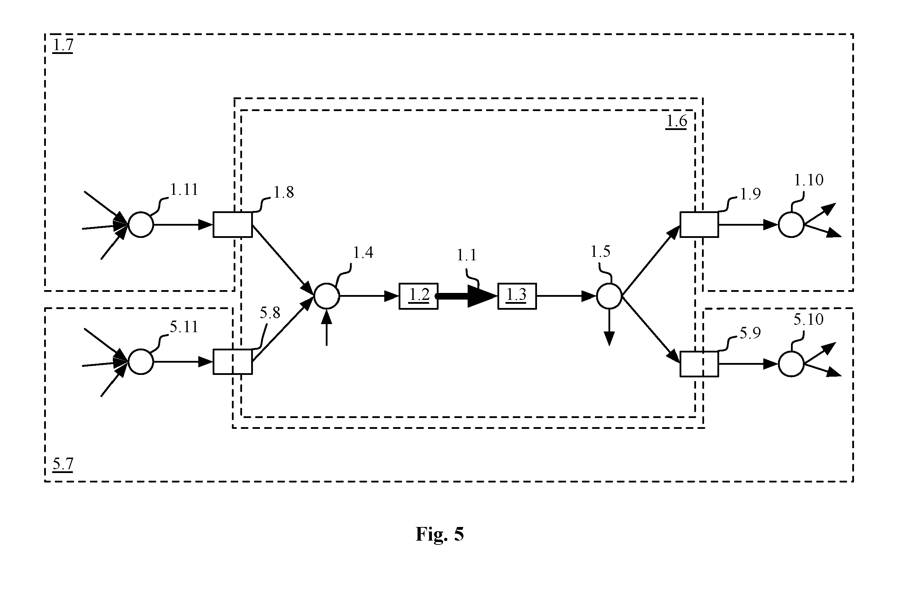

Le procédé peut également s'appliquer pour une pluralité de réseaux sécurisés et donc qualifiés de domaines rouges comme illustré par la Fig. 5. Sur cette figure, on reprend les références de la figure 1. Un second domaine sécurisé 5.7 est connecté au domaine noir 1.6. Ce domaine comprend un routeur amont rouge 5.11 connecté à une passerelle de sécurité 5.8. Cette passerelle est connectée au même routeur noir 1.4 que la passerelle de sécurité du premier domaine rouge 1.7. En aval, le trafic issu du domaine noir est redirigé selon son origine vers l'une des passerelles de sécurité 1.9 pour le premier domaine rouge 1.7 et vers la passerelle de sécurité 5.9 pour le second. Il est ensuite redirigé vers le routeur rouge 5.10 pour ce second domaine rouge. Les niveaux de sécurité implémentés au sein des deux domaines rouges peuvent être différents ou égaux selon les modes de réalisation. Cet exemple s'étend à un nombre quelconque de domaines sécurisés. Chacun des domaines va appliquer une politique de service qui lui est propre. Chacune de ces politiques se traduit par un jeu de profils de services mis en oeuvre au sein dudit domaine. Le paramétrage de ces jeux de profils assure la cohérence de la politique de services entre les différents domaines. Chaque domaine met en oeuvre une méthode de détection de la congestion du lien radio qui lui est propre et n'implique pas d'échanges de messages du domaine noir vers l'un des domaines rouge. Le profil actif à un instant donné dans chaque domaine est toujours adapté au niveau de congestion du lien radio et de la réalité du trafic au sein du domaine considéré.

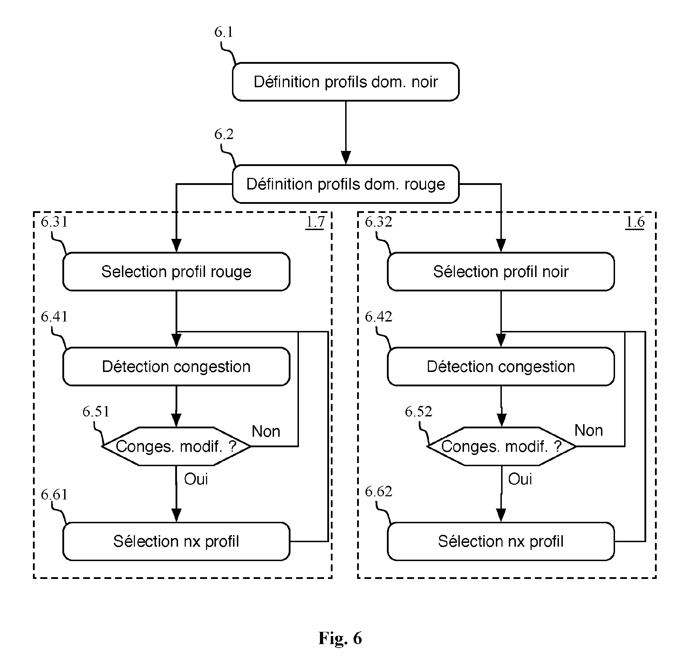

Un exemple de procédé de gestion de la politique de service selon l'invention est illustré Fig. 6. Lors d'une première étape 6.1, l'on définit une liste de profils pour le domaine noir. Chaque profil contient un ensemble de paramètres applicables à la gestion de la politique de service. Le résultat est donc une liste dont le premier profil correspond à la politique de service souhaitée pour le domaine noir en l'absence de congestion du lien radio. Ce sera le profil actif par défaut. Les profils suivants sont adaptés à un niveau de congestion du lien de plus en plus important. Lors d'une seconde étape 6.2, l'on définit de même une liste de profils pour le domaine rouge. Une fois que ces profils sont définis en cohérence, ils sont mis en place au sein de chaque domaine. Selon l'exemple de réalisation de l'invention illustré par la Fig. 6, il y a deux domaines : un domaine rouge 1.7 et un domaine noir 1.6. Le module de gestion de la politique de service de chaque domaine sélectionne un profil dans la liste des profils définis pour son domaine lors des étapes 6.31 pour le domaine rouge et 6.32 pour le domaine noir. Avantageusement, le premier profil destiné à la politique souhaitée en l'absence de congestion est sélectionné par défaut comme profil actif au sein de chaque domaine. Chaque domaine utilise alors sa méthode de détection de la congestion. Ceci est fait lors de l'étape 6.41 dans le domaine rouge et 6.42 dans le domaine noir. La méthode de détection de la congestion dans le domaine noir peut utiliser toute technique explicite ou implicite de détection. On peut citer la mesure directe de la bande passante au niveau du modem, l'utilisation d'un taux d'erreur, la comparaison des débits émis et reçus ou autres. Ces méthodes sont appliquées au lien quelle que soit sa topologie parmi les topologies suivantes : point à point, point à multipoint et multipoint à point.

Lors de l'étape 6.51 dans le domaine rouge et 6.52 dans le domaine noir, l'on teste l'état de congestion du lien. Ce test peut être fait de manière régulière ou alors être déclenché par une modification de l'état du lien de manière asynchrone, typiquement sur interruption. Le test consiste à détecter une modification du niveau de congestion. Lorsqu'une telle modification est détectée, l'on passe aux étapes 6.61 si l'on est dans le domaine rouge ou 6.62 si l'on est dans le domaine noir, pour sélectionner un nouveau profil tenant compte du nouveau niveau de congestion.

Ainsi, le profil utilisé par la politique de service de chaque domaine est toujours cohérent avec le niveau de congestion détecté dans le lien. En fonction de la méthode de détection de la congestion utilisée, il est possible que les deux domaines ne détectent pas la congestion et n'effectuent donc pas le basculement de profil de manière synchronisée. Ceci peut intervenir en cas d'absence de trafic dans le domaine. En ce cas, le retard éventuel dans la détection n'a pas d'incidence car précisément il n'y a pas de trafic sur le lien dans le domaine concerné.

L'invention permet donc de gérer une politique de service cohérente sur l'ensemble des domaines de sécurité utilisant un lien radio et ce sans nécessiter de transfert d'informations entre les domaines et donc sans affaiblir les mécanismes de sécurité mis en place basés sur les passerelles de sécurité.

## Revendications

1. Réseau de télécommunication, ledit réseau étant constitué d'un premier domaine de sécurité appelé domaine noir (1.6) comportant au moins un lien radio (1.1), d'au moins un second domaine (1.7) de sécurité plus élevée appelé domaine rouge connecté au domaine noir,
ledit réseau de télécommunication comportant :
- des moyens pour détecter un niveau de congestion du lien radio au sein du domaine noir ;
- des moyens pour détecter le niveau de congestion du lien radio au sein de chaque domaine rouge, ladite détection étant basée uniquement sur des échanges de messages au sein dudit domaine rouge ;
**caractérisé en ce qu'**il comporte :
- une liste prédéfinie de profils contenant chacun un ensemble de paramètres applicables à la gestion de la politique de service pour le domaine noir, chaque profil étant adapté à un niveau donné de congestion du lien radio ;
- une liste prédéfinie de profils contenant chacun un ensemble de paramètres applicables à la gestion de la politique de service pour chaque domaine rouge, chaque profil étant adapté à un niveau donné de congestion du lien radio ;
lesdites listes étant prédéfinies de façon à ce que à un niveau de congestion détecté corresponde, pour tous les domaines et de manière cohérente entre les domaines, un profil de politique de service, lesdits paramètres étant définis en fonction de la topologie du domaine noir,
et **en ce qu'**il comporte en outre :
- des moyens pour sélectionner un nouveau profil adapté au niveau de congestion du lien radio en cas de détection d'un changement dudit niveau de congestion au sein du domaine noir ;
- des moyens pour sélectionner un nouveau profil adapté au niveau de congestion du lien radio en cas de détection d'un changement dudit niveau de congestion au sein de chaque domaine rouge.

2. Réseau de télécommunication selon la revendication 1, **caractérisé en ce que** le domaine noir (1.6) comporte un routeur noir (2.4) en amont du lien radio qui constitue un des points de mise en oeuvre de la politique de service du domaine noir et qui agrège le trafic (2.16) reçu du domaine rouge (1.7) et le trafic (2.15) issu du domaine noir (1.6) pour produire un flux de donnée (2.17) à destination du lien radio (2.1).

3. Réseau de télécommunication selon la revendication 1, **caractérisé en ce que** le domaine noir (1.6) comporte un routeur noir (3.4) en amont du lien radio (3.1) qui constitue un des points de mise en oeuvre de la politique de service du domaine noir, et un commutateur (3.18) qui agrège le trafic reçu dudit routeur du domaine noir et le trafic (3.16) issu du domaine rouge pour produire un flux (3.17) de donnée à destination du lien radio.

4. Réseau de télécommunication selon l'une des revendications 1 à 3, **caractérisé en ce que** le trafic issu du domaine rouge transite par un routeur rouge (1.11) qui constitue un des points de mise en oeuvre de la politique de service du domaine rouge puis par une passerelle de sécurité (1.8) en charge du chiffrement dudit trafic.

5. Procédé de gestion de la politique de service dans un réseau de télécommunication, ledit réseau étant constitué d'un premier domaine de sécurité appelé domaine noir comportant au moins un lien radio, d'au moins un second domaine de sécurité plus élevé appelé domaine rouge connecté au domaine noir,
ledit procédé comportant :
- une étape (6.42) de détection d'un niveau de congestion du lien radio au sein du domaine noir ;
- une étape (6.41) de détection du niveau de congestion du lien radio au sein de chaque domaine rouge, ladite détection étant basée uniquement sur des échanges de messages au sein dudit domaine rouge ;
**caractérisé en ce qu'**il comporte :
- une étape (6.1) préalable de définition d'une liste de profils contenant chacun un ensemble de paramètres applicables à la gestion de la politique de service pour le domaine noir, chaque profil étant adapté à un niveau donné de congestion du lien radio ;
- une étape (6.2) préalable de définition d'une liste de profils contenant chacun un ensemble de paramètres applicables à la gestion de la politique de service pour chaque domaine rouge, chaque profil étant adapté à un niveau donné de congestion du lien radio ;
lesdites listes étant prédéfinies de façon à ce que à un niveau de congestion détecté corresponde, pour tous les domaines et de manière cohérente entre les domaines, un profil de politique de service, lesdits paramètres étant définis en fonction de la topologie du domaine noir,
et **en ce qu'**il comporte en outre :
- une étape (6.62) de sélection d'un nouveau profil adapté au niveau de congestion du lien radio en cas de détection (6.52) d'un changement dudit niveau de congestion au sein du domaine noir ;
- une étape (6.61) de sélection d'un nouveau profil adapté au niveau de congestion du lien radio en cas de détection (6.51) d'un changement dudit niveau de congestion au sein de chaque domaine rouge.

## Patentansprüche

1. Telekommunikationsnetz, wobei das genannte Netz aus einer ersten, schwarze Domäne genannten, wenigstens eine Funkverbindung (1.1) umfassenden Sicherheitsdomäne (1.6), wenigstens einer zweiten, rote Domäne genannten, an die schwarze Domäne angeschlossenen Domäne (1.7) höherer Sicherheit besteht,
wobei das genannte Telekommunikationsnetz folgendes umfasst:
- Mittel, um einen Überlastungsgrad der Funkverbindung innerhalb der schwarzen Domäne zu detektieren,
- Mittel, um den Überlastungsgrad der Funkverbindung innerhalb der roten Domäne zu detektieren, wobei die genannte Detektion ausschließlich auf dem Austausch von Nachrichten innerhalb der genannten roten Domäne beruht,
**dadurch gekennzeichnet, dass** es folgendes umfasst:
- eine vordefinierte Liste von Profilen, die jeweils eine Gruppe von, auf die Verwaltung der Servicepolitik für die schwarze Domäne anwendbaren Parametern beinhalten, wobei jedes Profil an einen gegebenen Überlastungsgrad der Funkverbindung angepasst ist,
- eine vordefinierte Liste von Profilen, die jeweils eine Gruppe von, auf die Verwaltung der Servicepolitik für jede rote Domäne anwendbaren Parametern beinhalten, wobei jedes Profil an einen gegebenen Überlastungsgrad der Funkverbindung angepasst ist.
wobei die genannten Listen so vordefiniert sind, dass für alle Domänen und auf kohärente Weise zwischen den Domänen einem detektierten Überlastungsgrad ein Servicepolitikprofil entspricht, wobei die genannten Parameter in Abhängigkeit von der Topologie der schwarzen Domäne definiert sind,
und dadurch, dass es zudem folgendes umfasst:
- Mittel, um im Fall der Detektion einer Änderung des genannten Überlastungsgrads innerhalb der schwarzen Domäne ein neues, an den Überlastungsgrad der Funkverbindung angepasstes Profil auszuwählen,
- Mittel, um im Fall der Detektion einer Änderung des genannten Überlastungsgrads innerhalb der roten Domäne ein neues, an den Überlastungsgrad der Funkverbindung angepasstes Profil auszuwählen.

2. Telekommunikationsnetz gemäß Patentanspruch 1, **dadurch gekennzeichnet, dass** die schwarze Domäne (1.6) stromaufwärts der Funkverbindung einen schwarzen, einen der Umsetzungspunkte der Servicepolitik der schwarzen Domäne bildenden Router (2.4) umfasst, der den, von der roten Domäne (1.7) empfangenen Verkehr (2.16) und den Verkehr (2.15) aus der schwarzen Domäne (1.6) aggregiert, um einen Datenfluß (2.17) zur Funkverbindung (2.1) zu erzeugen.

3. Telekommunikationsnetz gemäß Patentanspruch 1, **dadurch gekennzeichnet, dass** die schwarze Domäne (1.6) stromaufwärts der Funkverbindung (3.1) einen schwarzen, einen der Umsetzungspunkte der Servicepolitik der schwarzen Domäne bildenden Router (3.4) und einen Schalter (3.18) umfasst, der den, vom genannten schwarzen Router empfangenen Verkehr und den Verkehr (3.16) aus der roten Domäne aggregiert, um einen Datenfluß (3.17) zur Funkverbindung zu erzeugen.

4. Telekommunikationsnetz gemäß einem der Patentansprüche 1 bis 3, **dadurch gekennzeichnet, dass** der Verkehr aus der roten Domäne über einen roten, einen der Umsetzungspunkte der Servicepolitik der roten Domäne bildenden Router (1.11) und dann über ein, für die Verschlüsselung des genannten Verkehrs zuständiges Sicherheits-Gateway (1.8) läuft.

5. Verfahren zur Verwaltung der Servicepolitik in einem Telekommunikationsnetz, wobei das genannte Netz aus einer ersten, schwarze Domäne genannten, wenigstens eine Funkverbindung umfassenden Sicherheitsdomäne, wenigstens einer zweiten, rote Domäne genannten, an die schwarze Domäne angeschlossenen Domäne höherer Sicherheit besteht,
wobei das Verfahren folgendes umfasst:
- einen Schritt (6.42), der darin besteht, einen Überlastungsgrad der Funkverbindung innerhalb der schwarzen Domäne zu detektieren,
- einen Schritt (6.41), der darin besteht, den Überlastungsgrad der Funkverbindung innerhalb jeder roten Domäne zu detektieren, wobei die genannte Detektion ausschließlich auf einem Austausch von Nachrichten innerhalb der roten Domäne beruht,
**dadurch gekennzeichnet, dass** es folgendes umfasst:
- einen vorausgehenden Schritt (6.1), der darin besteht, eine Liste von Profilen, die jeweils eine Gruppe von, auf die Verwaltung der Servicepolitik für die schwarze Domäne anwendbaren Parametern beinhalten, zu erstellen, wobei jedes Profil an einen gegebenen Überlastungsgrad der Funkverbindung angepasst ist,
- einen vorausgehenden Schritt (6.2), der darin besteht, eine Liste von Profilen, die jeweils eine Gruppe von, auf die Verwaltung der Servicepolitik für jede rote Domäne anwendbaren Parametern beinhalten, zu erstellen, wobei jedes Profil an einen gegebenen Überlastungsgrad der Funkverbindung angepasst ist,
wobei die genannten Listen im voraus so erstellt werden, dass für alle Domänen und auf kohärente Weise zwischen den Domänen einem detektierten Überlastungsgrad ein Servicepolitikprofil entspricht, wobei die Parameter in Abhängigkeit von der Topologie der schwarzen Domäne definiert sind,
und dadurch, dass es zudem folgendes umfasst:
- einen Schritt (6.62), der darin besteht, im Fall der Detektion (6.52) einer Änderung desgenannten Überlastungsgrads innerhalb der schwarzen Domäne ein neues, an den Überlastungsgrad der Funkverbindung angepasstes Profil auszuwählen,
- einen Schritt (6.61), der darin besteht, im Fall der Detektion (6.51) einer Änderung desgenannten Überlastungsgrads innerhalb jeder roten Domäne, ein neues, an den Überlastungsgrad angepasstes Profil auszuwählen.

## Claims

1. Telecommunication network, said network consisting of a first security domain, called black domain (1.6), comprising at least one radio link (1.1), at least one second domain (1.7) with higher security, called red domain, connected to the black domain,
said telecommunication network including:
- means for detecting the congestion level on the radio link in the black domain;
- means for detecting the congestion level on the radio link in each red domain, said detection being based solely on exchanges of messages in said red domain;
**characterized in that** it includes:
- a predefined list of profiles, each containing a set of parameters applicable to the management of the service policy for the black domain, each profile being adapted to a given congestion level on the radio link;
- a predefined list of profiles, each containing a set of parameters applicable to the management of the service policy for each red domain, each profile being adapted to a given congestion level on the radio link;
said predefined lists being predefined so that a service policy profile correspond to a detected congestion level, for all domains and in a consistent manner between the domains, said parameters being defined according to the topology of the black domain,
and **in that** it further includes:
- means for selecting a new profile adapted to the congestion level of the radio link in the case of detection of a change in said congestion level in the black domain;
- means for selecting a new profile adapted to a congestion level on the radio link in the case of detection of a change in said congestion level in each red domain.

2. Telecommunication network according to claim 1, **characterised in that** the black domain (1.6) includes a black router (2.4) upstream of the radio link, which constitutes one of the points implementing the service policy of the black domain and which aggregates the traffic (2.16) received from the red domain (1.7) and the traffic (2.15) coming from the black domain (1.6) in order to produce a data stream (2.17) towards the radio link (2.1).

3. Telecommunication network according to claim 1, **characterised in that** the black domain (1.6) includes a black router (3.4) upstream of the radio link (3.1), which constitutes one of the points implementing the service policy of the black domain, and a switch (3.18) that aggregates the traffic received from said router of the black domain and the traffic (3.16) coming from the red domain in order to produce a data stream (3.17) towards the radio link.

4. Telecommunication network according to one of claims 1 to 3, **characterised in that** the traffic coming from the red domain passes through a red router (1.11) that constitutes one of the points implementing the service policy of the red domain and then through a security gateway (1.8) in charge of encrypting said traffic.

5. Method for managing the service policy in a telecommunication network, said network consisting of a first security domain, called black domain, comprising at least one radio link, at least one second domain with higher security, called red domain, connected to the black domain,
said method including:
- a step (6.42) of detecting the congestion level on the radio link in the black domain;
- a step (6.41) of detecting the congestion level on the radio link in each red domain, said detection being based solely on exchanges of messages in said red domain;
characterized it comprises:
- a preliminary step (6.1) of defining a list of profiles, each containing a set of parameters applicable to the management of the service policy for the black domain, each profile being adapted to a given congestion level of the radio link;
- a preliminary step (6.2) of defining a list of profiles, each containing a set of parameters applicable to the management of the service policy for each red domain, each profile being adapted to a given congestion level on the radio link;
said predefined lists being predefined so that a service policy profile correspond to a detected congestion level, for all domains and in a consistent manner between the domains, said parameters being defined according to the topology of the black domain,
and in that it further includes:
- a step (6.62) of selecting a new profile adapted to the congestion level on the radio link in the case of detection (6.52) of a change in said congestion level in the black domain;
- a step (6.61) of selecting a new profile adapted to a congestion level on the radio link in the case of detection (6.51) of a change in said congestion level in each red domain.
